# EUROPÄISCHE PATENTSCHRIFT

(11) **EP 2 571 734 B1**
(45) Veröffentlichungstag und Bekanntmachung des Hinweises auf die Patenterteilung: **29.10.2014**
(21) Anmeldenummer: 11721534.3
(22) Anmeldetag: 26.05.2011
(51) Int. Cl.: B60S 3/04

(54) **VORRICHTUNG UND VERFAHREN ZUM AUFBRINGEN VON REINIGUNGSFLÜSSIGKEIT AUF EIN RAD EINES FAHRZEUGS IN EINER FAHRZEUGWASCHANLAGE UND FAHRZEUGWASCHANLAGE**
DEVICE AND METHOD FOR APPLYING CLEANING FLUID TO A WHEEL OF A VEHICLE IN A VEHICLE WASHING INSTALLATION AND VEHICLE WASHING INSTALLATION
DISPOSITIF ET PROCÉDÉ D'APPLICATION DE LIQUIDE DE NETTOYAGE SUR UNE ROUE D'UN VÉHICULE DANS UNE INSTALLATION DE LAVAGE DE VÉHICULES ET INSTALLATION DE LAVAGE DE VÉHICULES

(30) Priorität: 02.09.2010 DE 102010036190
(43) Veröffentlichungstag der Anmeldung: 27.03.2013
(73) Patentinhaber: WashTec Holding GmbH, 86153 Augsburg (DE)
(72) Erfinder: WIMMER, Georg, 86444 Affing (DE)
(74) Vertreter: Charrier, Rapp & Liebau
(86) Internationale Anmeldenummer: PCT/EP2011/058629
(87) Internationale Veröffentlichungsnummer: WO 2012/028346

(56) Entgegenhaltungen:
- EP-A1- 0 700 814
- EP-A1- 0 752 353
- EP-A1- 2 077 211
- DE-A1-102008 034 571
- DE-U1- 9 311 390
- US-A- 4 985 957

## Beschreibung

Die Erfindung betrifft eine Vorrichtung zum Aufbringen einer Reinigungsflüssigkeit auf ein Rad eines Fahrzeugs in einer Fahrzeugwaschanlage nach dem Oberbegriff des Anspruchs 1, eine Fahrzeugwaschanlage nach dem Oberbegriff des Anspruchs 6 sowie ein Verfahren zum Aufbringen einer Reinigungsflüssigkeit auf ein Rad eines Fahrzeugs in einer Fahrzeugwaschanlage.

In der DE 20 2008 012 139 U1 ist eine Vorrichtung zum Reinigen des Rads eines Fahrzeugs in einer Fahrzeugwaschanlage offenbart. Diese weist eine durch einen Bürstenantrieb rotierend antreibbare Radwaschbürste auf, die durch eine Führungseinrichtung zwischen einer radfernen Ruhestellung und einer Reinigungsstellung am Rad motorisch bewegbar ist, wobei die Radwaschbürste durch die Führungseinrichtung von der Ruhestellung zum Rad hin schräg nach unten in die Reinigungsstellung bewegbar ist. Bevor bei derartigen Radwascheinrichtungen das Rad mit einer Radwaschbürste gereinigt wird, muss zunächst Reinigungsflüssigkeit auf das Rad aufgesprüht werden, um anhaftende Verunreinigungen anzulösen und dann leichter mit der Radwaschbürste entfernen zu können.

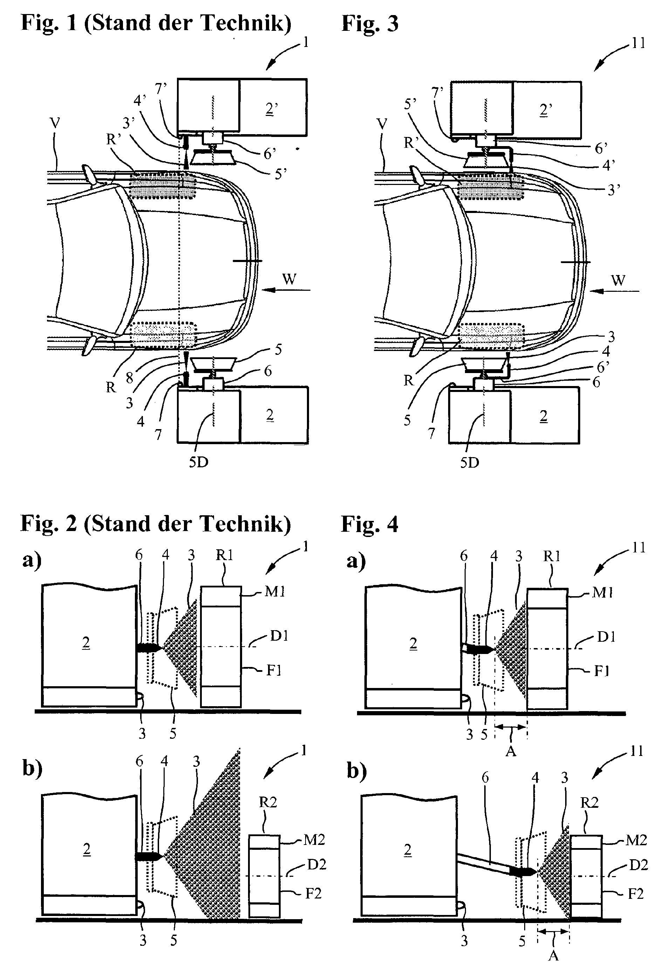

Ein weiteres Beispiel einer bekannten Fahrzeugwaschanlage in Form eines verfahrbaren Waschportals 1 mit zwei Portalsäulen 2, 2' zeigt Fig. 1. Eine die Portalsäulen 2, 2' verbindende Portaltraverse ist aus Gründen der besseren Übersichtlichkeit weggelassen. Da die in Fig. 1 auf beiden Seiten des zu waschenden Fahrzeugs V dargestellten Teile des Waschportals 1 identisch ausgebildet sind, wird nachfolgend vor allem die in einer Waschrichtung W linke, in Fig. 1 untere Seite beschrieben. Die Aussagen gelten entsprechend für die andere Portalsäule 2', wobei entsprechende Teile der Portalsäule 2' auf der in Fig. 1 oberen Seite die um einen Apostroph ergänzten gleichen Bezugsziffern tragen wie die entsprechenden Teile auf der anderen Seite, beispielweise 2' anstelle 2.

Bei einem Radwaschvorgang wird zunächst das Fahrzeug V in eine in Fig. 1 gezeigte Waschposition gebracht. Anschließend fährt das Waschportal 1 zunächst in Waschrichtung W, welche in Längsrichtung des Fahrzeugs V verläuft. Um das schematisch angedeutete Rad R mit Reinigungsmittel 3, 3' zu besprühen, ist in Waschrichtung W vor einer Radwaschbürste 5 eine Reinigungsdüse 4 angeordnet.

Die Radwaschbürste 5 ist an einer ausfahrbaren Führung 6 angeordnet. Die Führung 6 dient dazu, um bei Fahrzeugen mit unterschiedlicher Spurweite die Radwaschbürste 5 möglichst mit ihrer Rotationsachse auf die Achshöhe des Fahrzeugrads R bringen zu können. Von der in Fig. 1 gezeigten Stellung verfährt das Waschportal dann weiter in Waschrichtung W mit sprühender Düse 4 am Rad R entlang, bis das Ende des Rads R erreicht ist. Sowohl Beginn als auch Ende des Rads R kann durch eine Lichtschranke 7 festgestellt werden, die unter dem Fahrzeug V hindurch einen Lichtstrahl 8 quer zur Waschrichtung W sendet.

Damit die aufgesprühte Reinigungsflüssigkeit möglichst lange auf das Rad R einwirken kann, fährt das Waschportal 1 dann zunächst in Waschrichtung W weiter zum hinteren Rad des Fahrzeugs V und besprüht dieses auf gleiche Weise mit Reinigungsflüssigkeit. Ggf. können währenddessen weitere Fahrzeugbehandlungen, beispielweise eine Fahrzeugwäsche durchgeführt werden. Anschließend fährt das Waschportal 1 entgegen der Waschrichtung W zurück, erkennt anhand der Lichtschranke 7 nochmals die Radstellung und entfernt dann den angelösten Schmutz auf dem Rad R mittels der ausfahrbaren Radwaschbürste 5.

Fig. 2 zeigt eine Draufsicht auf die Portalsäule 2 des Waschportals 1 aus Fig. 1 aus Waschrichtung W, wobei aus Gründen der besseren Erläuterung die Radwaschbürste 5 mit Führung 6 nur schematisch und gestrichelt angedeutet ist. Fig. 2 a) zeigt den Fall, dass das Rad R mit Felge F1 und Gummimantel M1 sehr groß ist, was üblicherweise bei Fahrzeugen mit großer Spurweite der Fall ist. Das Rad R steht deshalb schon relativ nahe an der Portalsäule 2. Um zumindest die große Radfelge F1 ausreichend mit Reinigungsflüssigkeit benetzen zu können, muss die Reinigungsdüse 4 einen wie in Fig. 2 a) gezeigten aufgeweiteten Sprühstrahl 3 bereitstellen. Wie aus einem Vergleich von Fig. 1 und Fig. 2 hervorgeht, ist der Sprühstrahl 3 im Wesentlichen in Höhenrichtung aufgeweitet, nicht aber in Längsrichtung des Fahrzeugs V.

Soll nun im selben Waschportal 1 ein Fahrzeug mit kleinen Rädern gewaschen werden, welches üblicherweise eine kleine Spurweite aufweist, so steht ein solches kleines Rad R2, wie in Fig. 2 b) gezeigt, in der Regel relativ weit von der Portalsäule 2 entfernt. Da die Reinigungsdüse 4 jedoch fest an der Portalsäule 2 befestigt ist, muss der Sprühstrahl 3 sehr weit sprühen, wobei er sich dann sehr stark aufweitet, wie in Fig. 2 b) gezeigt. Dies weist den Nachteil auf, dass wegen der großen Entfernung von Sprühdüse 4 zum Rad R2 ein deutlich stärkerer Sprühstrahl 3 notwendig ist, d.h. ein entsprechend höherer Druck an der Reinigungsdüse 4 bereitgestellt werden muss. Zudem sprüht der Sprühstrahl 3 zum großen Teil am Rad R2 vorbei, so dass ein großer Teil der Reinigungsflüssigkeit unnütz auf den Boden oder auf Bereiche des Fahrzeugs oberhalb des Rads R2 gesprüht wird. Dies verbraucht nicht nur deutlich mehr Reinigungsflüssigkeit als eigentlich für das kleine Rad R2 nötig, sondern die aggressive Reinigungsflüssigkeit für die Rad-/Felgenreinigung greift auch Teile der Karosserie, insbesondere Verzierelemente wie Zierleisten aus Chrom oder Kunststoff an.

Ein Beispiel für eine oben beschriebene bekannte Sprühdüse offenbart die DE 90 00 427 U1 offenbart eine Radwaschvorrichtung für Fahrzeugräder mit einem zur Fahrzeugfelge zustellbaren Waschkopf. Der Waschkopf trägt als einzige Reinigungsvorrichtung entweder Sprühdüsen oder eine rotierende Waschbürste, wobei die Sprühdüsen zum vollständigen Reinigen der Felge vorgesehen sind. Eine gemeinsame Zustellung von Sprühdüse und rotierender Waschbürste ist dort nicht vorgesehen.

Eine weiteres Felgenreinigungsgerät, bei dem eine Waschbürste zur Felge zugestellt wird, offenbart die DE 35 18 297 A1, wobei auch dort lediglich ortsfest installierte Sprühdüsen für den Schaum und Flüssigkeit vorgesehen sind. Auch dieses weist die oben beschriebenen Nachteile auf.

Die EP 2 077 211 A1 offenbart eine Fahrzeugwaschanlage mit einem fahrbaren Portal und daran angeordneten, an die Felgen zustellbaren Felgenwaschbürsten. Die Felgenwaschbürsten können zusätzlich eine Spritzdüse zum Aufbringen einer Reinigungsflüssigkeit auf die Felgen aufweisen, wobei die Spritzdüse während des Aufbringens der Reinigungsflüssigkeit auf die Drehachse der Felgen zentriert wird. Ein gleichmäßiges Verteilen der Reinigungsflüssigkeit auf die Felge mit ausreichender Einwirkzeit vor dem Waschen der Felgen mit der Felgenwaschbürste ist dort nicht möglich.

Die DE 93 11 390 U1 offenbart eine Sprüheinrichtung an einer Portalwaschanlage für Kraftfahrzeuge, wobei dort Radbürsten zum Reinigen der Fahrzeugfelgen mit unmittelbar daran angeordneten Sprühdüsen vorgesehen ist. Zum Aufbringen der Einsprühflüssigkeit wird die Radbürste auf der Höhe der Felgen, also an der Radachse positioniert, wobei dann die Felge eingesprüht und hernach gereinigt wird. Wird zum Reinigen der Felgen ein spezielles, aggressives Felgenreinigungsmittel verwendet, so wird an der Radbürste eine zweite Düse vorgesehen, bei der die Achse des Sprühkegels parallel zur Rotationsachse der Räderbürste bzw. deren Bewegungsrichtung ist, wodurch das Einsprühen der Seitenpartie des Fahrzeuges wirksamer durchgeführt wird. Ein gleichmäßiges Verteilen der Reinigungsflüssigkeit auf der Felge und besonderes auf deren Randbereichen mit ausreichender Einwirkzeit vor dem Waschen der Felgen ist dort so nicht möglich.

Die EP 0 752 353 A1 betrifft eine Waschvorrichtung für Fahrzeugräder in einer Waschstrasse, mit je einer zu beiden Seiten des Bewegungsbereichs des Fahrzeuges angeordneten, um eine horizontale Bürstenachse rotierende Waschbürste, die mittels einer Vorspannkraft an das Fahrzeug andrückbar ist. Eine Spritzdüse ist in Fahrzeugbewegungsrichtung vor oder hinter der Waschbürste in einem solchen Abstand angeordnet, dass der Hochdruckstrahl das Fahrzeug unbeeinträchtigt von der Waschbürste erreichen kann. Da die Waschbürste an das Fahrzeug angedrückt wird, wird die Spritzdüse automatisch in richtigem Abstand vom Fahrzeug gehalten, so dass eine Bestimmung des Abstands der Spritzdüse vom Rad des Fahrzeugs nicht nötig ist.

Die EP 0 700 814 A1 betrifft eine Portalwaschanlage mit Felgenbürste und daran angeordneter Seitensprühdüse, welche zusammen mit der Felgenbürste zugestellt wird und in der Höhe einstellbar ist. Eine Abstandsmessung zwischen Seitenwaschvorrichtung und Rad des Fahrzeugs ist dort nicht vorhanden, da der Abstand zwischen Seitensprühdüse und Fahrzeug über die Halterung der Felgenbürste eingestellt wird.

Die DE 10 2008 034 571 A1 offenbart in den feststehenden Radleitschienen angebrachte Abstandssensoren, welche den Abstand beider Fahrzeugseiten von Radleitschienen detektieren sollen und hierdurch die Positionierung des Fahrzeugs in einem vorgegebenen Waschbereich ermöglichen. Ein Hinweis, die Abstandssensoren in einer Felgenwaschvorrichtung anzuordnen, ist dort nicht offenbart.

Aufgabe der vorliegenden Erfindung ist es deshalb, die oben genannten Nachteile zu überwinden und eine Vorrichtung zum Aufbringen einer Reinigungsflüssigkeit auf ein Rad eines Fahrzeugs, eine Fahrzeugwaschanlage sowie ein Verfahren zum Aufbringen einer Reinigungsflüssigkeit auf ein Rad eines Fahrzeugs bereit zustellen, welche ein sparsames, an die Größe der zu reinigenden Räder angepasstes Aufbringen der Reinigungsflüssigkeit ermöglichen.

Diese Aufgabe löst die Erfindung durch eine Vorrichtung zum Aufbringen einer Reinigungsflüssigkeit auf das Rad eines Fahrzeugs in einer Fahrzeugwaschanlage mit den Merkmalen des Anspruchs 1, eine Fahrzeugwaschanlage mit den Merkmalen des Anspruchs 6 sowie ein Verfahren zum Aufbringen einer Reinigungsflüssigkeit auf ein Rad eines Fahrzeugs in einer Fahrzeugwaschanlage mit den Merkmalen des Anspruchs 7. Vorteilhafte Ausgestaltungen und zweckmäßige Weiterbildungen der Erfindung sind in den Unteransprüchen angegeben.

Zu berücksichtigen ist zunächst, dass mit dem Reinigen des Rads nicht die Reinigung des gesamten Rads, also auch der Radinnenseiten, sondern lediglich die Reinigung der von der Fahrzeugaußenseite zugänglichen Radteile, insbesondere der Radfelge und ggf. auch des äußeren Radmantels, zu verstehen ist.

Eine eingangs genannte Vorrichtung bei der die Sprühdüse zum Bewegen zwischen einer radfernen Ruhestellung und einer in einem Sprühabstand vom Rad entfernten Sprühstellung an einer bewegbaren Zustellvorrichtung angeordnet ist, ist erfindungsgemäß dadurch gekennzeichnet, dass die Vorrichtung Mittel zum Bestimmen des Abstands des Rads zur Vorrichtung aufweist, wobei die Vorrichtung eingerichtet ist a) zum Bestimmen der Position des Rads in Waschrichtung, b) Bestimmen des Abstands des Rads zur Vorrichtung, danach c) Bewegen der Sprühdüse in die im Sprühabstand vom Rad entfernte Sprühstellung, d) Aufsprühen von Reinigungsflüssigkeit mit der Sprühdüse auf das Rad und Bewegen der Sprühdüse in Waschrichtung entlang des Rads, e) Beenden des Sprühvorgangs, wenn das in Waschrichtung vordere Ende des Rads erreicht ist. Hierdurch kann die Sprühdüse stets in die gegenüber dem Rad optimale Sprühstellung gebracht werden, unabhängig von der Größe des Rads oder dem Abstand des Rads von der Vorrichtung. In einer vorteilhaften Weiterbildung kann die Zustellvorrichtung durch die Führung der Radwaschbürste gebildet sein, die Sprühdüse wird also zusammen mit der Radwaschbürste bewegt. Dies ermöglicht einen einfachen Aufbau der Vorrichtung, da die Zustellvorrichtung keinen zusätzlichen Raum und Antrieb benötigt. Ggf. können hiermit auch bereits bestehende Fahrzeugwaschanlagen einfach mit einer erfindungsgemäßen Vorrichtung nachgerüstet werden.

Ein eingangs genanntes Verfahren ist erfindungsgemäß dadurch gekennzeichnet, dass die Position des Rads in Waschrichtung und der Abstands des Rads zur Vorrichtung bestimmt wird, dann die Sprühdüse in die im Sprühabstand vom Rad entfernte Sprühstellung bewegt wird, anschließend Reinigungsflüssigkeit mit der Sprühdüse auf das Rad aufgesprüht und dabei die Sprühdüse in Waschrichtung entlang des Rads bewegt wird und abschließend der Sprühvorgang beendet wird, wenn das in Waschrichtung vordere Ende des Rads erreicht ist.

Bevorzugt können die Mittel zum Bestimmen des Abstands des Rads zur Vorrichtung vorteilhaft die Führung und die Radwaschbürste umfassen. Hierdurch kann in Schritt b) des erfindungsgemäßen Verfahrens der Abstand des Rads zur Vorrichtung dadurch bestimmt werden, dass die Radwaschbürste zum Rad hin bewegt wird und ein Sensor das Erreichen des Rads durch die Radwaschbürste detektiert, so dass der Abstand der ausgefahrenen Radwaschbürste zur Vorrichtung weitgehend dem Abstand des Rads zur Vorrichtung entspricht. In einer alternativen Ausführung kann in Schritt b) der Abstand des Rads zur Vorrichtung dadurch bestimmt werden, dass die Radwaschbürste über einen Zeitraum zum Rad hin bewegt wird, der für dass vollständige Ausfahren der Radwaschbürste benötigt wird, so dass nach Ablauf dieses Zeitraums der Abstand der ausgefahrenen Radwaschbürste zur Vorrichtung dem Abstand des Rads zur Vorrichtung entspricht. Da der Anpressdruck der Radwaschbürste an das Rad so eingestellt ist, dass das Rad nicht beschädigt wird, lässt sich damit auf einfache Weise ohne zusätzliche Sensoren und Messelektronik der Abstand des Rads zur Vorrichtung bestimmen. Dies erleichtert insbesondere eine Nachrüstung bestehender Maschinen. Vorteilhaft kann in den eben beschriebenen Ausführungen des Verfahrens vor Schritt b) die Radwaschbürste auf das Rad ausgerichtet wird, wobei bevorzugt die Drehachse des Rads und die Drehachse der Radwaschbürste quer zur Waschrichtung aufeinander ausgerichtet werden.

Dabei kann vorteilhaft, nachdem die Radwaschbürste an das Rad bewegt und der Abstand des Rads zur Vorrichtung bestimmt wurde, die Führung um den Sprühabstand vom Rad wegbewegt werden, wodurch die Sprühdüse in den gewünschten Sprühabstand bewegt wird.

In einer betriebsmäßig vorteilhaften Ausführung kann die Sprühdüse in einer Waschrichtung der Fahrzeugwaschanlage hinter der Radwaschbürste angeordnet sein, was insbesondere dann vorteilhaft ist, wenn die Führung und die Radwaschbürste als Mittel zum Bestimmen des Abstands verwendet werden. Denn dann muss das Waschportal nur zur Abstandsbestimmung des Rads angehalten werden.

Sicherheitstechnisch vorteilhaft kann bei dieser Ausführung die Sprühdüse in einer Zustellrichtung der Führung hinter der Radwaschbürste angeordnet sein, um eine Kollision der Sprühdüse mit dem Rad beim Anfahren der Radwaschbürste an das Rad sicher zu verhindern.

Eine erfindungsgemäße Fahrzeugwaschanlage weist eine oben und nachfolgend beschriebene Vorrichtung zum Aufbringen einer Reinigungsflüssigkeit auf ein Rad eines Fahrzeugs in der Fahrzeugwaschanlage auf.

Weitere Besonderheiten und Vorzüge der Erfindung ergeben sich aus der folgenden Beschreibung eines bevorzugten Ausführungsbeispiels anhand der Zeichnungen. Diese zeigen:
- **Fig. 1**: eine schematische Draufsicht auf einen Teil einer bekannten Fahrzeugwaschanlage;
- **Fig. 2**: zwei schematische Draufsichten auf ein Portalsäule der bekannten Fahrzeugwaschanlage aus Fig. 1 bei einem Fahrzeug mit großer Spurweite und großen Rädern (Fig. 2 a) und bei einem Fahrzeug mit kleinen Rädern und kleiner Spurweite (Fig. 2 b);
- **Fig. 3**: eine schematische Draufsicht auf eine erfindungsgemäße Fahrzeugwaschanlage;
- **Fig. 4**: zwei Draufsichten auf eine Portalsäule der Fahrzeugwaschanlage aus Fig. 3 bei einem Fahrzeug mit großer Spurweite und großen Rädern (Fig. 4 a) und bei einem Fahrzeug mit kleiner Spurweite und kleinen Rädern (Fig. 4b);
- **Fig. 5**: eine seitliche Draufsicht auf einen Teil eines zu reinigenden Fahrzeugs (Fig. 5a) und Draufsichten auf eine Portalsäule der in Fig. 3 gezeigten erfindungsgemäßen Fahrzeugwaschanlage in sieben unterschiedlichen Stellungen (Fig. 5b-h).

In Fig. 3 ist ein Teil einer erfindungsgemäßen Fahrzeugwaschanlage in Form eines Waschportals 11 dargestellt. Sofern in Fig. 3 bis 5 gezeigte Teile des Waschportals 11 den in Fig. 1 bis 3 gezeigten Teilen des bekannten Waschportals 1 entsprechen, werden gleiche Bezugszeichen verwendet. Angaben zum bekannten Waschportal 1 aus Fig. 1 bis 3 gelten entsprechend, gleiches gilt für einander entsprechende Teile auf beiden Seiten des Waschportals 1 bzw. 11.

Das Waschportal 11 weist nach Fig. 3 Portalsäulen 2, 2' auf. An der Portalsäule 2 ist eine Radwaschbürste 5 an einer quer zur Waschrichtung W ausfahrbaren Führung 6 sowie eine Lichtschranke 7 zur Bestimmung des Beginns und des Endes des Rads R vorgesehen.

Im Gegensatz zum bekannten Waschportal 1 ist beim erfindungsgemäßen Waschportal 11 jedoch die Reinigungsdüse 4, auch als Sprühdüse oder Düse bezeichnet, zum Aufbringen der Reinigungsflüssigkeit nicht fest und in Waschrichtung W vor der Radwaschbürste 5 an der Portalsäule 2 angebracht, sondern an der ausfahrbaren Führung 6 in Waschrichtung W hinter der Radwaschhürste 5. Hierzu ist ein Auslegerarm 6' an der Führung 6 vorgesehen, welcher in Höhe der Drehachse der Radwaschbürste 5 verläuft, wie in Fig. 4 erkennbar.

Hierdurch kann, wie aus Fig. 4 hervorgeht, die Reinigungsdüse 4 stets in einen gleichen Abstand A zu dem zu reinigenden Rad R gebracht werden. Wie aus Fig. 4b) erkennbar, benetzt der Sprühstrahl 3 dann fast ausschließlich das kleine Rad R2, so dass nur ein kleiner Teil der versprühten Reinigungsflüssigkeit nicht auf das Rad R2 aufgebracht wird, sondern daran vorbeisprüht. Umgekehrt kann der Reinigungsstrahl 3 auf die große, üblicherweise gesetzlich festgelegte maximal zulässige Radgröße eines großen Rads R1 angepasst werden, so dass der größte Teil des großen Rads R1 mit Reinigungsflüssigkeit 3 besprüht werden kann, wie in Fig. 4a) dargestellt.

So lassen sich zum einen beträchtliche Mengen an Reinigungsflüssigkeit sparen, und zum anderen gegen die aggressive Reinigungsflüssigkeit empfindliche Teile von Fahrzeugen, insbesondere kleinen Fahrzeugen, schützen. In einer alternativen, hier nicht gezeigten Ausführung der Erfindung kann die Reinigungsdüse anstelle am Auslegerarm 6' der verfahrbaren Führung 6 auch eine eigene Führung aufweisen, welche bevorzugt neben der Führung 6 der Radwaschbürste 5 angeordnet ist.

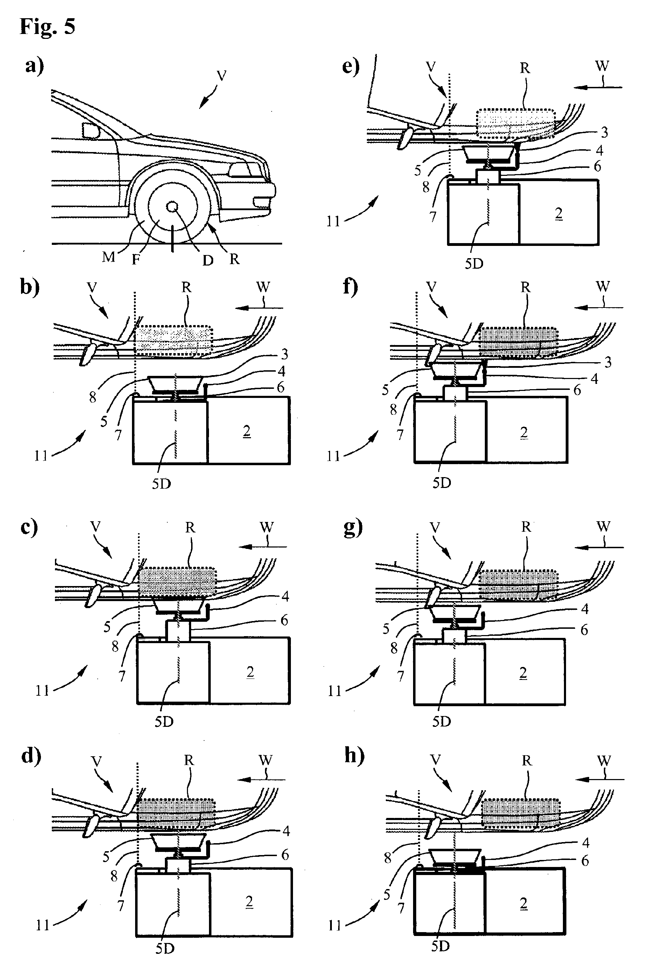

Der Abstand A der Reinigungsdüse 4 zur Außenseite des zu reinigenden Rads R wird erfindungsgemäß dadurch eingestellt, dass eine Erfassungsvorrichtung für die Bestimmung der Entfernung zum Rad vorgesehen ist. Dies kann eine Ultraschall-, Infrarot-, Laser- oder ähnliche an sich bekannte Messmethode sein. In einer bevorzugten Ausführung der Erfindung wird jedoch auf solche zusätzliche Sensorik verzichtet. Vielmehr wird dann das Anfahren der Radwaschbürste 5 an das Rad R zur Erfassung verwendet. Hierzu ist die Reinigungsdüse 4 vorteilhaft in Waschrichtung W hinter der Radwaschbürste 5 angeordnet. Der Ablauf einer Erfassung des Rads R und das Anfahren der Reinigungsdüse 4 in den vorgegebenen Abstand A zeigen die Figuren 5b) bis h). Fig. 5 a) dient lediglich der Darstellung der exakten Position des Rads R des Fahrzeugs V.

In Fig. 5 b) wird mittels der Lichtschranke 7 das Ende des Rads R erkannt, wobei vorher bereits der Anfang des Rads R mittels der Lichtschranke 7 bestimmt wurde. Aus diesen beiden Werten wird dann die Lage der Radachse D ausgemittelt, da die Radachse D ja genau mittig zwischen beiden Werten liegt. Die Drehachse 5D der Radwaschbürste 5 wird dann mittels der Portalsäule 2 auf die Drehachse D des Rads R ausgerichtet, wie in Fig. 5 b) gezeigt. Anschließend fährt in Fig. 5 c) die Führung 6 die Radwaschbürste 5 an das Rad R, wobei die Führung 6 auf an sich bekannte Weise feststellen kann, dass er das Rad R erreicht hat. Dies geschieht beispielsweise dadurch, dass ein Widerstandsaufnehmer in der Führung vorgesehen ist, welcher den mechanischen Widerstand des Rads R gegenüber der Radwaschbürste 5 detektiert. Alternativ kann die Führung 6 auch eine bestimmte, für ihren maximalen Ausfahrweg notwendige Zeit ausgefahren werden, unabhängig davon, ob sie vorher bereits am Rad R anschlägt oder nicht. Da die Zustellkraft der Führung 6 so eingestellt ist, dass das Rad R durch das Andrücken der Radwaschbürste 5 nicht beschädigt wird, auch wenn die Führung 6 die maximale Ausfahrdauer über beständig gegen das Rad R drückt, ist nach Ablauf der für einen vollständigen Ausfahrweg notwendigen Zeit sichergestellt, dass die Radwaschbürste 5 sicher am Rad R anliegt. Anschließend wird die Führung 6 von der in Fig. 5 c) gezeigten Stellung direkt am Rad R in die in Fig. 5 d) gezeigte Stellung im Abstand A der Reinigungsdüse 4 vom Rad R zurückgefahren. Dies entspricht dem optimalen Abstand A für das Aufbringen der Reinigungsflüssigkeit auf das Rad R. Anschließend wird in Fig. 5 e) Reinigungsflüssigkeit mittels des Reinigungsstrahls 3 auf das Rad R aufgesprüht, wobei die Portalsäule 2 währenddessen in Waschrichtung W bis in die in Fig. 5 f) gezeigte Stellung weiterfährt.

In Fig. 5 g) wird dann der Sprühvorgang der Reinigungsdüse 4 beendet, was anhand der durch die Lichtschranke 7 vorher bestimmten, in einer Anlagensteuerung des Waschportals 11 abgelegten Werten für die Fahrzeugkontur wie auch die Reifengeometrie, ermittelt werden kann. In Fig. 5 h) fährt dann die Führung 6 die Radwaschbürste 5 wieder zurück in die vollständig eingefahrene Stellung an der Portalsäule 2. Anschließend wird auf gleiche Art und Weise ein hinteres, in den Zeichnungen nicht dargestelltes Rad des Fahrzeugs V mit Reinigungsflüssigkeit besprüht. Anschließen werden dann beim Rückfahrvorgang des Waschportals 12 entgegen der Waschrichtung W die Räder in bekannter Weise mit der Radwaschbürste 5 gereinigt.

Die maßgeblich in Fig. 5 beschriebene Ausführung der Erfindung weist den Vorteil auf, dass keine zusätzlichen Sensoren oder Erfassungsvorrichtungen für die Bestimmung des gewünschten Abstands A zwischen Rad R und Reinigungsdüse 4 vorgesehen werden müssen. Vielmehr werden die schon vorhandenen Bauteile, insbesondere die Lichtschranke 7 und die Radwaschbürste 5 mit Führung 6, verwendet, um auf einfache Weise den gewünschten Abstand A einstellen zu können.

## Patentansprüche

1. Vorrichtung zum Aufbringen einer Reinigungsflüssigkeit auf ein Rad (R; R1; R2) eines Fahrzeugs (V) in einer Fahrzeugwaschanlage (1) mit einer Sprühdüse (4, 4') und einer mittels einer Führung (6) zwischen einer radfernen Ruhestellung und einer Reinigungsstellung am Rad (R; R1; R2) bewegbaren, rotierend antreibbaren Radwaschbürste (5), wobei die Sprühdüse (4) zum Bewegen zwischen einer radfernen Ruhestellung und einer in einem Sprühabstand (A) vom Rad (R; R1; R2) entfernten Sprühstellung an einer bewegbaren Zustellvorrichtung angeordnet ist, **dadurch gekennzeichnet, dass** die Vorrichtung Mittel zum Bestimmen des Abstands des Rads (R; R1; R2) zur Vorrichtung aufweist, wobei die Vorrichtung eingerichtet ist zum
a) Bestimmen der Position des Rads (R; R1; R2) in Waschrichtung (W),
b) Bestimmen des Abstands des Rads (R; R1; R2) zur Vorrichtung, danach
c) Bewegen der Sprühdüse (4) in die im Sprühabstand (A) vom Rad (R; R1; R2) entfernte Sprühstellung,
d) Aufsprühen von Reinigungsflüssigkeit mit der Sprühdüse (4) auf das Rad (R; R1; R2) und Bewegen der Sprühdüse (4) in Waschrichtung (W) entlang des Rads (R; R1; R2),
e) Beenden des Sprühvorgangs, wenn das in Waschrichtung (W) vordere Ende des Rads (R; R1; R2) erreicht ist.

2. Vorrichtung nach Anspruch 1, **dadurch gekennzeichnet, dass** die Zustellvorrichtung durch die Führung (6) der Radwaschbürste (5) gebildet ist.

3. Vorrichtung nach Anspruch 2, **dadurch gekennzeichnet, dass** die Mittel zum Bestimmen des Abstands des Rads (R; R1; R2) die Führung (6) und die Radwaschbürste (5) umfassen.

4. Vorrichtung nach einem der Ansprüche 1 bis 3, **dadurch gekennzeichnet, dass** die Sprühdüse (4) in einer Waschrichtung (W) der Fahrzeugwaschanlage (1) hinter der Radwaschbürste (5) angeordnet ist.

5. Vorrichtung nach einem der Ansprüche 1 bis 4, **dadurch gekennzeichnet, dass** die Sprühdüse (4) in einer Zustellrichtung der Führung (6) hinter der Radwaschbürste (5) angeordnet ist.

6. Fahrzeugwaschanlage mit einem gegenüber einem zu reinigenden Fahrzeug (V) in eine Waschrichtung (W) hin und her verfahrbaren Waschportal (1) und daran angeordneten Behandlungsaggregaten, **dadurch gekennzeichnet, dass** an in der Waschrichtung (W) hin und her verfahrbaren Portalsäulen (2, 2') des Waschportals (1) jeweils eine Vorrichtung nach einem der voranstehenden Ansprüche vorgesehen ist.

7. Verfahren zum Aufbringen einer Reinigungsflüssigkeit auf ein Rad (R; R1; R2) eines Fahrzeugs (V) in einer Fahrzeugwaschanlage (1) mit einer Vorrichtung nach einem der Ansprüche 1 bis 5 mit den Schritten:
a) Bestimmen der Position des Rads (R; R1; R2) in Waschrichtung (W),
b) Bestimmen des Abstands des Rads (R; R1; R2) zur Vorrichtung, danach
c) Bewegen der Sprühdüse (4) in die im Sprühabstand (A) vom Rad (R; R1; R2) entfernte Sprühstellung,
d) Aufsprühen von Reinigungsflüssigkeit mit der Sprühdüse (4) auf das Rad (R; R1; R2) und Bewegen der Sprühdüse (4) in Waschrichtung (W) entlang des Rads (R; R1; R2),
e) Beenden des Sprühvorgangs, wenn das in Waschrichtung (W) vordere Ende des Rads (R; R1; R2) erreicht ist.

8. Verfahren nach Anspruch 7, **dadurch gekennzeichnet, dass** vor Schritt b) die Radwaschbürste (5) auf das Rad (R; R1; R2) ausgerichtet wird.

9. Verfahren nach Anspruch 8, **dadurch gekennzeichnet, dass** in Schritt b) der Abstand des Rads (R; R1; R2) zur Vorrichtung dadurch bestimmt wird, dass die Radwaschbürste (5) zum Rad (R; R1; R2) hin bewegt wird und ein Sensor das Erreichen des Rads (R; R1; R2) durch die Radwaschbürste (5) detektiert, so dass der Abstand der ausgefahrenen Radwaschbürste (5) zur Vorrichtung dem Abstand des Rads (R; R1; R2) zur Vorrichtung entspricht.

10. Verfahren nach Anspruch 8, **dadurch gekennzeichnet, dass** in Schritt b) der Abstand des Rads (R; R1; R2) zur Vorrichtung dadurch bestimmt wird, dass die Radwaschbürste (5) über einen Zeitraum zum Rad (R; R1; R2) hin bewegt wird, der für dass vollständige Ausfahren der Radwaschbürste (5) benötigt wird, so dass nach Ablauf dieses Zeitraums der Abstand der ausgefahrenen Radwaschbürste (5) zur Vorrichtung dem Abstand des Rads (R; R1; R2) zur Vorrichtung entspricht.

11. Verfahren nach Anspruch 9 oder 10, **dadurch gekennzeichnet, dass** die Zustellvorrichtung der Sprühdüse (4) durch die Führung (6) der Radwaschbürste (5) gebildet ist und in Schritt c) die Führung (6) um den Sprühabstand (A) vom Rad (R; R1; R2) wegbewegt wird.

## Claims

1. Device for applying a cleaning liquid to a wheel (R; R1; R2) of a vehicle (V) in a vehicle washing facility (1) with a spray nozzle (4, 4') and a rotatably drivable wheel washing brush (5), which can be moved by means of a guide (6) between a rest position remote from the wheel and a cleaning position on the wheel (R; R1; R2), wherein the spray nozzle (4) is arranged on a movable feed device for movement between a rest position remote from the wheel and a spraying position removed from the wheel (R; R1; R2) at a spraying distance (A), **characterised in that** the device has means for determining the distance of the wheel (R; R1; R2) from the device, wherein the device is set up to
a) determine the position of the wheel (R; R1; R2) in the washing direction (W),
b) determine the distance of the wheel (R; R1; R2) from the device, thereafter to
c) move the spray nozzle (4) into the spraying position removed from the wheel (R; R1; R2) at the spraying distance (A),
d) spray cleaning liquid using the spray nozzle (4) onto the wheel(R; R1; R2) and to move the spray nozzle (4) in the washing direction (W) along the wheel (R; R1; R2),
e) end the spraying process when the front end of the wheel (R; R1; R2) in the washing direction (W) has been reached.

2. Device according to claim 1, **characterised in that** the feed device is formed by the guide (6) of the wheel washing brush (5).

3. Device according to claim 2, **characterised in that** the means for determining the distance of the wheel (R; R1; R2) comprise the guide (6) and the wheel washing brush (5).

4. Device according to any one of claims 1 to 3, **characterised in that** the spray nozzle (4) is arranged behind the wheel washing brush (5) in a washing direction (W) of the vehicle washing facility (1).

5. Device according to any one of claims 1 to 4, **characterised in that** the spray nozzle (4) is arranged behind the wheel washing brush (5) in a feed direction of the guide (6).

6. Vehicle washing facility with a washing portal (1), which can be moved back and forth in a washing direction (W) in relation to a vehicle (V) to be cleaned, and handling assemblies arranged thereon, **characterised in that** a device according to any one of the preceding claims is in each case provided on portal columns (2, 2') of the washing portal (1), which portal columns can be moved back and forth in the washing direction (W).

7. Method for applying cleaning liquid to a wheel (R; R1; R2) of a vehicle (V) in a vehicle washing facility (1) with a device according to any one of claims 1 to 5 having the steps:
a) determining the position of the wheel (R; R1; R2) in the washing direction (W),
b) determining the distance of the wheel (R; R1; R2) from the device, thereafter
c) moving the spray nozzle (4) into the spraying position removed from the wheel (R; R1; R2) at the spraying distance (A),
d) spraying cleaning liquid using the spray nozzle (4) onto the wheel (R; R1; R2) and moving the spray nozzle (4) in the washing direction (W) along the wheel (R; R1; R2),
e) ending the spraying process when the front end of the wheel (R; R1; R2) in the washing direction (W) has been reached:

8. Method according to claim 7, **characterised in that** the wheel washing brush (5) is aligned with the wheel (R; R1; R2) before step b).

9. Method according to claim 8, **characterised in that** the distance of the wheel (R; R1; R2) from the device is determined in step b) **in that** the wheel washing brush (5) is moved toward the wheel (R; R1; R2) and a sensor detects the reaching of the wheel (R; R1; R2) by the wheel washing bush (5), so the distance of the extended wheel washing brush (5) from the device corresponds to the distance of the wheel (R; R1; R2) from the device.

10. Method according to claim 8, **characterised in that** the distance of the wheel (R; R1; R2) from the device is determined in step b) **in that** the wheel washing brush (5) is moved toward the wheel (R; R1; R2) over a time period required to completely extend the wheel washing brush (5), so once this time period has passed, the distance of the extended wheel washing brush (5) from the device corresponds to the distance of the wheel (R; R1; R2) from the device.

11. Method according to claim 9 or 10, **characterised in that** the feed device of the spray nozzle (4) is formed by the guide (6) of the wheel washing brush (5) and the guide (6) is moved away from the wheel (R; R1; R2) by the spraying distance (A)in step c).

## Revendications

1. Dispositif servant à appliquer un liquide de nettoyage sur une roue (R ; R1 ; R2) d'un véhicule (V) dans une installation de lavage de véhicule (1) à l'aide d'une buse de pulvérisation (4, 4') et d'une brosse de lavage de roue (5) pouvant être entraînée en rotation, pouvant être déplacée au moyen d'un système de guidage (6) entre une position de repos située à distance de la roue et une position de nettoyage située au niveau de la roue (R ; R1 ; R2), sachant que la buse de pulvérisation (4) est disposée au niveau d'un dispositif d'approche mobile aux fins du déplacement entre une position de repos située à distance de la roue et une position de pulvérisation située à une distance de pulvérisation (A) de la roue (R ; R1 ; R2), **caractérisé en ce que** le dispositif présente des moyens servant à déterminer la distance entre la roue (R ; R1 ; R2) et le dispositif, sachant que le dispositif est mis au point pour :
a) déterminer la position de la roue (R ; R1 ; R2) dans une direction de lavage (W),
b) déterminer la distance entre la roue (R ; R1 ; R2) et le dispositif, puis
c) déplacer la buse de pulvérisation (4) dans la position de pulvérisation située à une distance de pulvérisation (A) de la roue (R ; R1 ; R2),
d) pulvériser le liquide de nettoyage à l'aide de la buse de pulvérisation (4) sur la roue (R ; R1 ; R2) et déplacer la buse de pulvérisation (4) dans la direction de lavage (W) le long de la roue (R ; R1 ; R2),
e) arrêter l'opération de pulvérisation lorsque l'extrémité avant dans la direction de lavage (W) de la roue (R ; R1 ; R2) est atteinte.

2. Dispositif selon la revendication 1, **caractérisé en ce que** le dispositif d'approche est formé par le système de guidage (6) de la brosse de lavage de roue (5).

3. Dispositif selon la revendication 2, **caractérisé en ce que** les moyens servant à déterminer l'éloignement de la roue (R ; R1 ; R2) comprennent le système de guidage (6) et la brosse de lavage de roue (5).

4. Dispositif selon l'une quelconque des revendications 1 à 3, **caractérisé en ce que** la buse de pulvérisation (4) est disposée, dans une direction de lavage (W) de l'installation de lavage de véhicule (1), derrière la brosse de lavage de roue (5).

5. Dispositif selon l'une quelconque des revendications 1 à 4, **caractérisé en ce que** la buse de pulvérisation (4) est disposée, dans une direction d'approche du système de guidage (6), derrière la brosse de lavage de roue (5).

6. Installation de lavage de véhicule équipée d'un portique de lavage (1) pouvant effectuer des allers et retours dans une direction de lavage (W) par rapport au véhicule (V) à nettoyer et de modules de traitement disposés au niveau dudit portique de lavage, **caractérisée en ce que** respectivement un dispositif selon l'une quelconque des revendications précédentes est prévu au niveau de piliers de portique (2, 2') du portique de lavage (1), lesquels peuvent effectuer des allers et retours dans la direction de lavage (W).

7. Procédé servant à appliquer un liquide de nettoyage sur une roue (R ; R1 ; R2) d'un véhicule (V) dans une installation de lavage de véhicule (1) à l'aide d'un dispositif selon l'une quelconque des revendications 1 à 5, comprenant les étapes qui suivent consistant à :
a) déterminer la position de la roue (R ; R1 ; R2) dans la direction de lavage (W),
b) déterminer la distance entre la roue (R ; R1 ; R2) et le dispositif, puis
c) déplacer la buse de pulvérisation (4) dans la position de pulvérisation située à une distance de pulvérisation (A) de la roue (R ; R1 ; R2),
d) pulvériser du liquide de nettoyage à l'aide de la buse de pulvérisation (4) sur la roue (R ; R1 ; R2) et déplacer la buse de pulvérisation (4) dans la direction de lavage (W) le long de la roue (R ; R1 ; R2),
e) arrêter l'opération de pulvérisation lorsque l'extrémité avant dans la direction de lavage (W) de la roue (R ; R1 ; R2) est atteinte.

8. Procédé selon la revendication 7, **caractérisé en ce que** la brosse de lavage de roue (5) est alignée sur la roue (R ; R1 ; R2) avant l'étape b).

9. Procédé selon la revendication 8, **caractérisé en ce qu'**on détermine, à l'étape b), la distance entre la roue (R ; R1 ; R2) et le dispositif, **en ce que** la brosse de lavage de roue (5) est déplacée en direction de la roue (R ; R1 ; R2) et **en ce qu'**un capteur détecte lorsque la brosse de lavage de roue (5) atteint la roue (R ; R1 ; R2), de sorte que la distance entre la brosse de lavage de roue (5) déployée et le dispositif correspond à la distance entre la roue (R ; R1 ; R2) et le dispositif.

10. Procédé selon la revendication 8, **caractérisé en ce qu'**on détermine, à l'étape b), la distance entre la roue (R ; R1 ; R2) et le dispositif, **en ce que** la brosse de lavage de roue (5) est déplacée en direction de la roue (R ; R1 ; R2) sur un laps de temps requis pour déployer complètement la brosse de lavage de roue (5) de sorte que, une fois ledit laps de temps écoulé, la distance entre la brosse de lavage de roue (5) déployée et le dispositif correspond à la distance entre la roue (R ; R1 ; R2) et le dispositif.

11. Procédé selon la revendication 9 ou 10, **caractérisé en ce que** le dispositif d'approche de la buse de pulvérisation (4) est formé par le système de guidage (6) de la brosse de lavage de roue (5) et **en ce que**, à l'étape c), le système de guidage (6) est déplacé de manière à s'éloigner de la roue (R ; R1 ; R2) d'une distance équivalente à la distance de pulvérisation (A).
